(19) **Europäisches Patentamt**

**European Patent Office**

**Office européen des brevets**

(11) **EP 1 046 344 B1**

(12) **EUROPEAN PATENT SPECIFICATION**

(45) Date of publication and mention
of the grant of the patent:
**01.09.2004 Bulletin 2004/36**

(51) Int Cl.7: **A23J 1/20**, A23C 9/142,
A23J 3/08, A23C 21/06

(21) Application number: **00108790.7**

(22) Date of filing: **25.04.2000**

(54) **Whey protein concentrate and method of producing the same**

Molkenproteinkonzentrat und Verfahren zu dessen Herstellung

Concentré de protéines de lactosérum et procédé de préparation

(84) Designated Contracting States:
**CH FR LI NL**

(30) Priority: **22.04.1999 JP 11460699**

(43) Date of publication of application:
**25.10.2000 Bulletin 2000/43**

(73) Proprietor: **SNOW BRAND MILK PRODUCTS, CO.,
LTD.
Sapporo-shi Hokkaido 065-0043 (JP)**

(72) Inventors:
 • **Yamane, Yoriko
 Higashimurayama-xhi, Tokyo (JP)**
 • **Kawachi, Yasuji
 Kawagoe-shi, Saitama-ken (JP)**
 • **Shigematsu, Akinori
 Kawagoe-shi, Saitama-ken (JP)**
 • **Sato, Kaoru
 Kamifukuoka-shi, Saitama-ken, 356-0033 (JP)**

(74) Representative: **VOSSIUS & PARTNER
Siebertstrasse 4
81675 München (DE)**

(56) References cited:
 **EP-A- 0 443 763        WO-A-00/30461
 US-A- 4 497 836        US-A- 5 085 881**

 • **MERIN, U. ET AL.: "MICROFILTRATION OF
 SWEET CHEESE WHEY " NEW ZEALAND
 JOURNAL OF DAIRY SCIENCE AND
 TECHNOLOGY , vol. 18, 1983, pages 153-160,
 XP000578938 New Zealand**
 • **TZIBOULA, A., ET AL.: "Microfiltration of milk
 with ceramic membranes: Infuence on casein
 composition and heat stability."
 MILCHWISSENSCHAFT, vol. 53, no. 1, 1998,
 pages 8-11, XP000738838**

# EP 1 046 344 B1

**Description**

The present invention relates to a whey protein concentrate containing a nonprotein nitrogen (NPN) component which provides heat tolerance and denatured whey proteins in a very small amount. Furthermore, the present invention relates to a method of producing a whey protein concentrate containing a nonprotein nitrogen component which provides heat tolerance and denatured whey proteins in a very small amount, wherein skim milk is treated with a microfiltration (MF) membrane, then the permeate obtained in the permeation side is concentrated, for example, by vacuum or by freezing, after which lactose and minerals are removed; or wherein skim milk is treated with a MF membrane, then the permeate obtained in the permeate side is treated with an ultrafiltration (UF) membrane, and the concentrate obtained in the concentration side is recovered, while the permeate isolated into the permeate side is concentrated, for example, by vacuum or by freezing, lactose and minerals are removed, and the resulting concentrate is added to the previously recovered concentrate.

Since the whey protein concentrate of the present invention contains denatured whey proteins in a very small amount, it has agreeable raw milk-like flavor, and plays an important role in forming a good texture for use as a stabilizing agent or the like.

Conventionally, whey protein concentrate is produced by isolating and concentrating whey proteins from sweet whey or acid whey, which is produced as a byproduct in the process of manufacturing cheese or acid casein.

A number of methods have been proposed for isolating and concentrating proteins from sweet or acid whey. However, isolation and concentration methods using ion exchange resin or a UF membrane are mainly used because of their low production cost and system stability. In isolation and concentration methods using a UF membrane, the level of concentration can be controlled by utilizing a property of the UF membrane that low molecular weight components (lactose, NPN, vitamins and minerals) along with water can be extracted from whey to obtain whey protein concentrate (WPC) having a protein concentration of 34 to 90%. Furthermore, in methods using ion exchange resin, proteins eluted from the ion exchange resin can be concentrated and demineralized by utilizing a property of the ion exchange resin that whey proteins can be specifically adsorbed to and released from the resins depending on their ionic strength and pH to obtain whey protein isolate (WPI) having a protein concentration of more than 90%.

However, the WPC and WPI thus obtained have a unique flavor (whey flavor) derived from cheese whey. Moreover, since heat treatment stimulates gelling of whey protein or generates fine protein precipitates, which affects the viscosity and texture of food products, the amount that can be added to food products is restricted. Further, since those components which affect heat tolerance of proteins and the NPN component which is the nutritional source for microbial fermentation are removed by concentrating whey proteins using a membrane, or by increasing the purity of whey proteins, as in the case of WPI, then heat tolerance is reduced and fermentation is retarded.

Given the circumstances described in the abovementioned prior art, the objective of the present invention is to provide a whey protein concentrate which has raw milk-like flavor but little whey flavor, contains a NPN component similar to raw milk, is more usable as a skim milk substitute than conventional whey protein concentrate, and contains a component which renders proteins heat tolerant, and a method of producing the same.

In the course of an intensive study to attain the abovementioned objective, the present inventors found that a permeate obtained by treating skim milk with a membrane contains a raw milk-like flavor component, and an NPN component which renders proteins heat tolerant and stimulates the growth of lactic acid bacteria, and further, that these components partly permeate a reverse osmotic (RO) membrane. Furthermore, the present inventors found that a whey protein fraction directly isolated from skim milk by MF membrane treatment has raw milk-like flavor because it contains this permeate component, and accordingly, can be widely used as a skim milk substitute.

In particular, the present inventors found that fermented milk having an appropriate hardness and viscosity, stable texture, and good flavor can be obtained by adding a certain amount of the whey protein concentrate of the present invention to a raw material mixture for fermented milk. The present invention is based on these findings.

Namely, in the present invention, casein and whey proteins are directly separated from pasteurized skim milk, the separated whey protein solution is concentrated in a way so as not to remove the raw milk-like flavor component and the NPN component, and so as to prevent denaturation of whey proteins by heating, after which excessive lactose and minerals are removed by crystallization and by electrodialysis to obtain a whey protein concentrate which can be used widely as a skim milk substitute.

For purposes of summarizing the invention and the advantages achieved over the prior art, certain objects and advantages of the invention have been described above.

Further aspects, features and advantages of this invention will become apparent from the detailed description of the preferred embodiments which follow.

These and other features of this invention will now be described with reference to the drawings of preferred embodiments which are intended to illustrate and not to limit the invention.

Figure 1 shows the process of manufacturing the whey protein concentrate.

Figure 2 shows the result of SDS-polyacrylamide gel electrophoresis of the whey protein concentrates (products 1 and 2 of the present invention) produced in the present invention.

The present invention will be explained as follows.

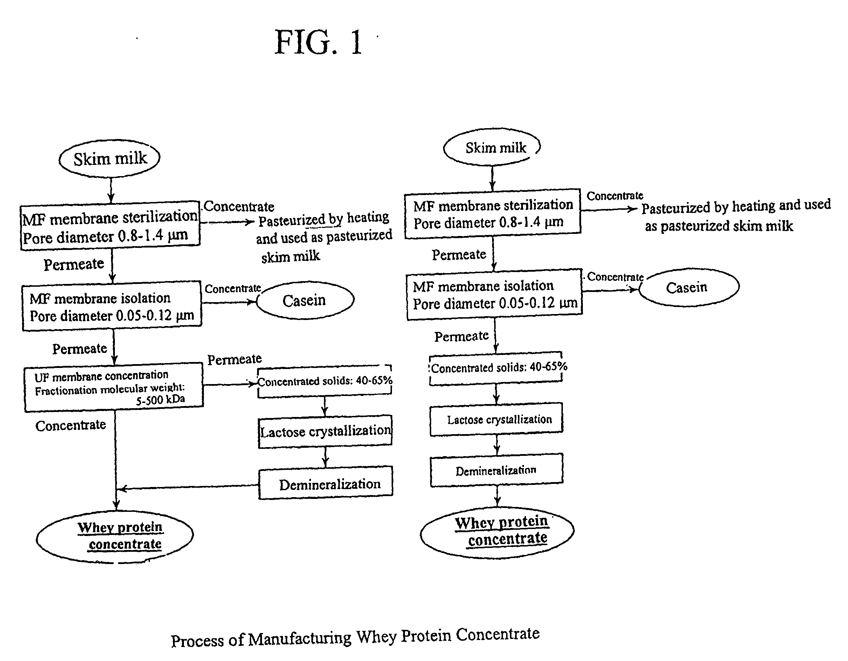

Figure 1 shows the process of producing a whey protein concentrate of the present invention.

Membrane treatment of the present invention can be carried out at a temperature of 5 to 55C. However, considering that β-lactoglobulin, one of the whey proteins, is drastically denatured by heating at a temperature higher than 60C, that membrane treatment capacity per unit membrane is increased at higher temperatures, and that microorganisms readily grow at 20 to 40C, it is desirable to carry out the treatment at a temperature of 10 to 18C or 45 to 50C.

Skim milk to be used in the present invention can be any skim milk as long as it is not treated at a temperature higher than 60C. At a temperature within the abovementioned membrane treatment range, skim milk is sterilized with an MF membrane having a pore diameter of 0.8 to 1.4 $\mu$m, then concentrated by 5 times with an MF membrane having a pore diameter of 0.05 to 0.12 $\mu$m at a membrane surface linear velocity of 3 to 8 m/s, after which dialysis filtration (DF) is carried out, if necessary, to separate casein and whey proteins. DF is effective in increasing the recovery of whey proteins but increases the load of concentration thereafter. Therefore, it is desirable to select a dialysis rate appropriate to the scale of the facility to be used.

It is important to use an MF membrane having a sharp distribution of pore diameter for the isolation of whey proteins in the present invention. The use of a ceramic membrane is desirable. As reported by Samuelsson, G. et al (Int. Dairy Journal, 7, 237-242, 1997), the rate of casein leakage is high when a membrane with a pore size of 0.14 $\mu$m is used. Accordingly, a membrane with a pore size of 0.05 to 12 $\mu$m is used. If treatment is carried out at a membrane surface linear velocity of 7 m/s, a membrane with a pore diameter of 0.1 $\mu$m is preferably used.

An MF permeate obtained by the abovementioned process comprises whey proteins, a raw milk-like flavor component, an NPN component, lactose and minerals. In order to increase the whey proteins content, the permeate is concentrated using a UF membrane having a fractionation molecular weight of 5,000 to 500,000 Da. The magnitude of the UF concentration can be 10-30 fold. The ratio of whey proteins increases as the magnitude of the concentration increases.

Further, the isolated UF permeate is concentrated by vacuum or by freezing to attain a solids concentration of 40 to 65%, preferably 55 to 60%, to crystallize lactose which is removed by filtration or centrifugation, then demineralized to remove minerals. The permeate thus treated is combined with the previously isolated UF concentrate to obtain a whey protein concentrate containing whey proteins having a low heat denaturation rate, a raw milk-like flavor component and a NPN component which stimulates lactic acid fermentation and renders proteins heat tolerant. Here, the UF permeate can be concentrated not only by vacuum or by freezing but by any means as long as components other than lactose and minerals are not removed. Concentration using a membrane is not preferable because components other than lactose and minerals are removed. Demineralization can be carried out by electrodialysis or by using ion exchange resin. Electrodialysis is desirable since the flavor component and the NPN component are partly removed with the use of ion exchange resin. The level of the removal of minerals is not particularly restricted. However, more than 50% of minerals are preferably removed to yield a better flavor of the whey protein concentrate.

The whey protein concentrate can be dried by an ordinary spray-dry method or the like to make a powdered product, if necessary.

The MF permeate obtained in the abovementioned process is directly concentrated by vacuum or by freezing to attain a solids concentration of 40 to 65%, preferably 55 to 60%, to crystallize lactose which is removed by filtration or centrifugation, then demineralized to remove minerals to obtain a whey protein concentrate containing whey proteins having a low heat denaturation rate, a raw milk-like flavor component and a NPN component which stimulates lactic acid fermentation and renders proteins heat tolerant. Here, demineralization can be carried out by electrodialysis or by using ion exchange resin. Electrodialysis is desirable since the flavor component and the NPN component are partly removed with the use of ion exchange resin. The level of the removal of minerals is not particularly restricted. However, more than 50% of minerals are preferably removed to yield a better flavor of the whey protein concentrate. The whey protein concentrate can be dried by an ordinary spray-dry method or the like to make a powdered product, if necessary.

In the abovementioned process, concentration by vacuum has to be carried out at a temperature of lower than 55C. Moreover, demineralization of the solution containing whey proteins by electrodialysis places a great load on an ion exchange membrane. However, the equipment cost is advantageously low as compared to the previously mentioned process since UF treatment is not required.

The whey protein concentrate thus obtained can be extensively used as a skim milk substitute since it has much less whey flavor but stronger raw milk flavor than conventional whey protein concentrate. Moreover, the gelling activity of whey proteins, a property of which has conventionally been used to good effect, can be controlled by changing heating conditions. Therefore, particularly in manufacturing fermented milk, the whey protein concentrate is highly valued as a useful raw material to increase hardness and viscosity and to prevent water release without using a stabilizing agent. Furthermore, casein isolated during the process of producing the whey protein concentrate of the present invention sustains its micelle structure and thus can be used in the same manner as a milk protein concentrate (MPC). Moreover, a cheese-manufacturing system with reduced whey release and a relatively easy whey treatment can be constructed using this casein as a raw material.

In this invention, a whey protein concentrate comprising a NPN component in a ratio of more than 5% of the total solids and denatured whey proteins in a ratio of less than 10% of the total whey proteins can be provided by a method in which skim milk is treated with an MF membrane, a permeate obtained in the permeation side is concentrated, then lactose and minerals are removed; or by a method in which skim milk is treated with an MF membrane, the permeate obtained in the permeation side is treated with a UF membrane to recover a concentrate obtained in the concentration side, and additionally, the permeate isolated in the permeation side is concentrated, lactose and minerals are removed, then the resulting permeate is added to the recovered concentrate.

This whey protein concentrate has an agreeable raw milk-like flavor, and plays an important role in forming a good texture for use as a stabilizing agent or the like.

The present invention will be explained in detail in the following examples.

Example 1

Skim milk (80 kg) was heated to 50C, filtered with an MF membrane with a pore size of 1.4 μm (material: aluminium oxide; module: monolith type; membrane area: 0.2 m$^2$; device: Pilot Plant MFS-1; a product of Tetra Pack Japan) to remove bacteria, and then concentrated by 5 times using an MF membrane T-11 having a pore size of 0.1 μm (material: titanium; module: monolith type; membrane area: 0.24 m$^2$; a product of NGK) at a membrane surface linear velocity of 5 m/s and a cross-membrane pressure difference of 0.55 kg/cm$^2$ to obtain 64 kg of an MF permeate. Next, this MF permeate was concentrated by vacuuming at 50C to attain a solids concentration of 60%, and cooled to 10C over a period of 20 hours to crystallize lactose, then this lactose was centrifuged, to obtain 4.0 kg of a lactose mother liquid. This mother liquid contained 36% solids, 10% proteins and 7% minerals. Further, the mother liquid was demineralized to attain a conductivity rate of 70% using an electrodialysis device (TS2-10, cation exchange membrane CMX, anion exchange membrane AMX, a product of Tokuyama) to obtain 3.5 kg of a whey protein concentrate (product 1 of the present invention) containing 31% solids, 10% proteins, and 3% minerals.

The whey protein concentrate thus obtained contained 1.7% of an NPN component, and had a raw milk-like flavor although it was more yellowish than skim milk.

Example 2

Skim milk (100 kg) was heated to 50C, filtered with an MF membrane with a pore size of 1.4 μm (material: aluminum oxide; module: monolith type; membrane area: 0.2 m$^2$; device: Pilot Plant MFS-1; a product of Tetra Pack Japan) to remove bacteria, and then concentrated by 5 times using an MF membrane T-11 having a pore size of 0.1 μm (material: titanium; module: monolith type; membrane area: 0.24 m$^2$; a product of NGK) at a membrane surface linear rate of 5 m/s and a cross-membrane pressure difference of 0.55 kg/cm$^2$ to obtain 80 kg of an MF permeate. This MF permeate was concentrated by 19 times using a UF membrane PW1812T having a fractionation molecular weight of 10,000 (material: polyether sulfone; module: spiral type; membrane area: 0.55 m$^2$; a product of Desalination) at a circulating flow rate of 10 L/min and an average pressure of 4 kg/cm$^2$ to obtain 4.0 kg of a UF concentrate containing 20% solids, 13% proteins and 1% minerals and 75 kg of a UF permeate containing 5% solids, 0.1% proteins and 0.6% minerals. Next, the UF permeate was concentrated by vacuum at 70C to attain a solids concentration of 60%, and cooled to 10C over a period of 20 hours to crystallize lactose, then this lactose was isolated by a filter press, to obtain 3.6 kg of a lactose-removed liquid containing 35% solids, 2% proteins and 1% minerals.

Further, the lactose-removed mother liquid was demineralized to attain a conductivity rate of 80% using an electrodialysis device (TS2-10, cation exchange membrane CMX, anion exchange membrane AMX, a product of Tokuyama), then the whole volume of the resulting liquid containing 27% solids, 2% proteins and 3% minerals was added to the previously isolated UF concentrate to obtain 7.0 kg of a whey protein concentrate (product 2 of the present invention) containing 23% solids, 8% proteins, and 2% minerals.

The whey protein concentrate thus obtained contained 1.43% of an NPN component, and had a raw milk-like flavor similar to the whey protein concentrate of Example 1.

Comparative Example 1

Skim milk (100 kg) was heated to 50C, filtered with an MF membrane with a pore size of 1.4 μm (material: aluminum oxide; module: monolith type; membrane area: 0.2 m$^2$; device: Pilot Plant MFS-1; a product of Tetra Pack Japan) to remove bacteria, and then concentrated by 5 times using an MF membrane T-11 having a pore size of 0.1 μm (material: titanium; module: monolith type; membrane area: 0.24 m$^2$; a product of NGK) at a membrane surface linear velocity of 5 m/s and a cross-membrane pressure difference of 0.55 kg/cm$^2$ to obtain 80 kg of an MF permeate. This MF permeate was concentrated by 2.5 times using a UF membrane PW1812T having a fractionation molecular weight of 10,000 (material: polyether sulfone; module: spiral type; membrane area: 0.55 m$^2$; a product of Desalination) at a circulation flow rate of 10 L/min and an average pressure of 4 kg/cm$^2$, then subjected to dialysis filtration by 0.45 times to obtain 32 kg of a UF concentrate, i.e., a whey protein concentrate, containing 5.44% solids, 1.9% proteins and 0.5% minerals (comparative product 1).

The whey protein concentrate thus obtained contained a relatively small amount of an NPN component (1.5%), and although it had little whey flavor similar to the products 1 and 2 of the present invention, it did not have much of a raw milk-like flavor.

Test Example 1

Skim milk (9.5 kg), butter (3 kg), white refined sugar (10.5 kg) and water (77 kg) were mixed by a homomixer to prepare a raw material mixture. This raw material mixture was heated to 50C and homogenized at 80 kg/cm$^2$, pasteurized at 90C for 10 minutes using a plate-type pasteurizing machine, then cooled to 42C by passing it through a plate-type heat exchanger. Yogurt starter (MRC32, a product of Snow Brand Milk Products Co., Ltd.) was added to the mixture at a concentration of 4% by weight, the resulting ad mixture was filled into 100-ml containers, and fermented at 42C until lactic acid acidity of 0.75% was attained, then cooled to 5C to obtain fermented milk.

Using this fermented milk as a control, product 2 of the present invention, comparative product 1 and WPC (Lactoprodan-35, a product of MD Foods) were each added to a raw material mixture prepared using 8.9 kg skim milk so as to adjust a non-fat solids content of 9.0%, in order to obtain three kinds of fermented milk, as described above.

Measurement and evaluation methods were as follows. Hardness was measured by using a Reoner (Yamaden). Namely, a plunger having a diameter of 16 mm was advanced at a speed of 1 mm/sec to the surface of the fermented milk being filled in a 100-ml container. The stress (g/cm$^2$) was measured when the surface was broken to estimate hardness. For the measurement of water release, a sample stored at 5C for 1 week was scooped into a hemispheric shape using an ice-cream scoop (45 mm in diameter), placed on a stainless steel mesh (mesh width: 0.4 mm) with the flat side of the hemispheric piece facing down, allowed to stand at 10C for 2 hours, then the volume of drops collected into a funnel was measured. The volume of the scooped hemispherical sample was 29 ml.

An organoleptic evaluation for flavor and texture of each sample was carried out by 10 panelists. Results of the evaluation were expressed by averages of the scores, i.e., very good (4), good (3), bad (2), and very bad (1).

Table 1

| Sample | Control | Product 2 of the present invention added | Comparative product 1 added | WPC a |
|---|---|---|---|---|
| Hardness (g/cm$^2$) | 22 | 35 | 32 | 43 |
| Released water (ml) | 12 | 4 | 5 | 3 |
| Flavor | 2.8 | 4.0 | 3.1 | 1.3 |
| Texture | 2.3 | 4.0 | 3.7 | 2.0 |

Fermented milk prepared with the addition of product 1 of the present invention had an appropriate hardness without adding a stabilizing agent and was evaluated to have better flavor and texture than the control sample. Fermented milk prepared with the addition of comparative product 1 was also evaluated to have better hardness, flavor and texture than the control sample, but was evaluated to have poorer flavor than fermented milk prepared with the addition of product 2 of the present invention. Fermented milk prepared with the addition of WPC had a lower score for flavor than the other two fermented milk samples because of its whey flavor, and had the highest hardness.

Test Example 2

The kind of proteins contained in the whey protein concentrates (products 1 and 2 of the present invention) prepared in Examples 1 and 2 were analyzed by SDS-polyacrylamide gel electrophoresis. Electrophoresis was carried out using an electrophoresis bath (No. 03-001, a product of TEFCO) with a 16% polyacrylamide gel in a separation buffer for 90 minutes. To prepare samples for electrophoresis, a mixture of 0.2 ml of the whey protein concentrate diluted by 20 times and 0.8 ml of SDS-Tris sample buffer were admixed, 50 µl of 2-mercaptoethanol and 50 µl of 0.1% bromphenol blue were added, and the mixture was reacted in a boiling bath for 5 minutes. For electrophoresis, 15 µl of each sample were used. Proteins in the gel were stained in a solution containing 0.1% amino black, 40% methanol and 10% acetic acid for 90 minutes, then destained in a solution containing 10% methanol and 7.5% acetic acid overnight.

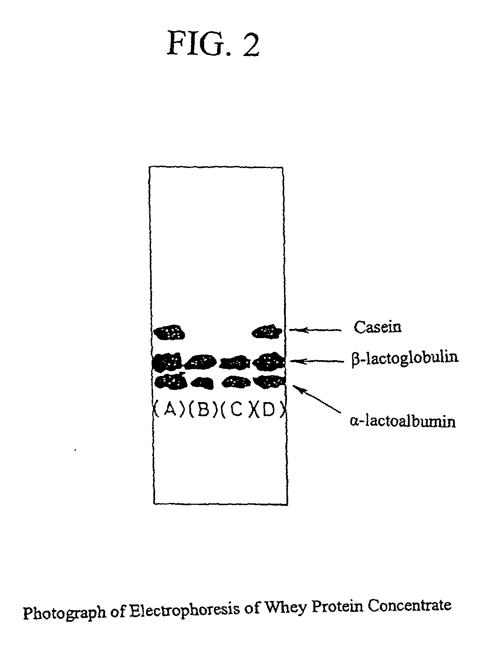

The positions of α-lactoalbumin, β-lactoglobulin and casein were determined by referring to standard electrophoresis markers (Sigma). Figure 2 shows the photograph of the gel of this electrophoresis.

In the photograph, lanes A and D are for standards of Sigma, lane B is for product 1 of the present invention and lane C is for product 2 of the present invention. As evident from Figure 2, casein was completely removed in the whey protein concentrates prepared in Example 1 and 2 (products 1 and 2 of the present invention).

Test Example 3

The denaturation rate of whey proteins in a whey protein concentrate of spray-dried product 2 of the present invention was evaluated as follows. First, 0.5 ml of the whey protein concentrate in which the solid content was adjusted to 6.95%, 4.5 ml of a saturated table salt solution were mixed, and the admixture was placed in a bath at 37C for 30 minutes. A 1 ml portion of the admixture was sampled into a microtube, and centrifuged (using AH-10, a product of Kokusan) at 12,000 rpm for 5 minutes. Insoluble proteins thus precipitated were regarded as denatured proteins. The denaturation rate was calculated as follows.

$$\text{Denaturation rate} = (\text{Denatured proteins}) / (\text{Total proteins})$$

$$= \{1-(\text{Protein concentration in supernatant})\} / (\text{Protein concentration in sample})$$

Proteins were measured using a BCA protein assay kit (a product of Pierce).

A commercial WPC (DOMOVICTUS 300SP) was used as a comparative sample. The denaturation rate for the whey protein concentrate of product 2 of the present invention was less than 1%, which was lower than that for the conventional whey protein concentrate WPC, i.e., 10%.

Test Example 4

Heat stability of product 1 of the present invention and comparative product 1 was evaluated as follows. Powdered skim milk was used as a control. Powdered skim milk was dissolved to prepare a control solution containing 2.3% casein (8.8% solids). A solution containing 10% product 1 of the present invention or comparative product 1 was added to skim milk in which the casein concentration was adjusted to 2.5%, to prepare sample solutions. After adjusting the pH of the samples to 6.7, which was the pH of the reconstituted skim milk solution, 1 ml of each sample was sealed in a 2-ml ampoule, and heated in an oil bath at 130C, and the time to generate fine precipitates was measured. Results showed that precipitates appeared in the control solution in 30 minutes. In contrast, precipitates appeared in 52 minutes in the solution in which 10% of product 1 of the present invention was added and in 39 minutes in the solution in which 10% of comparative product 1 was added. Thus, it was confirmed that product 1 of the present invention was better in preventing precipitation upon heating than the other samples.

The present invention can provide a whey protein concentrate having little whey flavor, which has been a problem in the past, and a good raw milk-like flavor, by directly isolating whey proteins from skim milk without intensive heat treatment, and by processing so as not to remove the flavor component of raw milk. Further, along with the flavor component derived from raw milk, the whey protein concentrate contains an NPN component, which stimulates lactic acid bacteria fermentation and confers heat tolerance to casein, and accordingly adds such functional activities to the whey protein concentrate. Moreover, since the denaturation rate for the whey proteins is low, the whey protein concentrate of gelling at heating can be controlled over a wide range.

Therefore, it is possible to manufacture a whey protein concentrate which can be extensively used, for example, in manufacturing fermented milk having an appropriate hardness and a rich raw milk-like flavor by partly substituting skim milk with this concentrate as a raw material for fermented milk, without adding agar, gelatin or the like.

**Claims**

1. A skim milk-derived whey protein concentrate comprising a nonprotein nitrogen (NPN) component in a ratio of more than 5% of the total solids and denatured whey proteins in a ratio of less than 10% of the total whey proteins, wherein said whey protein concentrate is obtainable by a method which comprises the steps of:

   treating skim milk with a microfiltration (MF) membrane to obtain a permeate in the permeation side;
   concentrating said permeate; and

removing lactose and minerals from said concentrated permeate to produce a skim milk-derived whey protein concentrate.

**2.** A skim milk-derived whey protein concentrate comprising a nonprotein nitrogen (NPN) component in a ratio of more than 5% of the total solids and denatured whey proteins in a ratio of less than 10% of the total whey proteins, wherein said whey protein concentrate is obtainable by a method which comprises the steps of:

treating skim milk with a microfiltration (MF) membrane to obtain a permeate in the permeation side;
treating said permeate with an ultrafiltration (UF) membrane to recover a concentrate obtained in the concentration side and isolate a permeate in the permeation side;
concentrating said isolated permeate;
removing lactose and minerals from said concentrated permeate; and
adding the resulting permeate to said recovered concentrate to produce a skim milk-derived whey protein concentrate.

**3.** A method for producing a skim milk-derived whey protein concentrate comprising the steps of:

treating skim milk with a microfiltration (MF) membrane having a pore size of 0.05 to 0.12 $\mu$m to obtain a permeate in the permeation side;
concentrating said permeate; and
removing lactose and minerals from said concentrated permeate to produce a skim milk-derived whey protein concentrate.

**4.** A method for producing a skim milk-derived whey protein concentrate comprising the steps of:

treating skim milk with a microfiltration (MF) membrane having a pore size of 0.05 to 0.12 $\mu$m to obtain a permeate in the permeation side;
treating said permeate with an ultrafiltration (UF) membrane to recover a concentrate obtained in the concentration side and isolate a permeate in the permeation side;
concentrating said isolated permeate;
removing lactose and minerals from said concentrated permeate; and
adding the resulting permeate to said recovered concentrate to produce a skim milk-derived whey protein concentrate.

**5.** The method as claimed in claim 3 or 4, wherein the whey protein concentrate comprises a nonprotein nitrogen (NPN) component in a ratio of more than 5% of the total solids and denatured whey proteins in a ratio of less than 10% of the total whey proteins.

**6.** The method as claimed in any one of claims 3 to 5, wherein the step of concentrating said permeate comprises concentrating the permeate by vacuum or freezing.

**Patentansprüche**

**1.** Molkenproteinkonzentrat aus Magermilch, umfassend eine Nichteiweiß-Stickstoffkomponente (NPN-Komponente) in einem Anteil von mehr als 5% der gesamten Feststoffe und denaturierte Molkenproteine in einem Anteil von weniger als 10% der gesamten Molkenproteine, wobei das Molkenproteinkonzentrat durch ein Verfahren erhältlich ist, welches die Schritte umfasst:

Behandeln der Magermilch mit einer Mikrofiltrationsmembran (MF-Membran), um ein Permeat auf der Permeationsseite zu erhalten;
Konzentrieren des Permeats; und
Entfernen der Lactose und der Mineralien aus dem konzentrierten Permeat, um ein Molkenproteinkonzentrat aus Magermilch herzustellen.

**2.** Molkenproteinkonzentrat aus Magermilch, umfassend eine Nichteiweiß-Stickstoffkomponente (NPN-Komponente) in einem Anteil von mehr als 5% der gesamten Feststoffe und denaturierte Molkenproteine in einem Anteil von weniger als 10% der gesamten Molkenproteine, wobei das Molkenproteinkonzentrat durch ein Verfahren erhältlich ist, welches die Schritte umfasst:

Behandeln der Magermilch mit einer Mikrofiltrationsmembran (MF-Membran), um ein Permeat auf der Permeationsseite zu erhalten;
Behandeln des Permeats mit einer Ultrafiltrationsmembran (UF-Membran), um ein Konzentrat, welches auf der Konzentrationsseite erhalten wird, zu gewinnen und um ein Permeat auf der Permeationsseite zu isolieren;
Konzentrieren des isolierten Permeats;
Entfernen der Lactose und der Mineralien aus dem konzentrierten Permeat; und
Zugabe des so erhaltenen Permeats zu dem gewonnenen Konzentrat, um ein Molkenproteinkonzentrat aus Magermilch herzustellen.

3. Verfahren zur Herstellung eines Molkenproteinkonzentrats aus Magermilch, umfassend die Schritte:

Behandeln der Magermilch mit einer Mikrofiltrationsmembran (MF-Membran), welche eine Porengröße von 0,05 bis 0,12 μm aufweist, um ein Permeat auf der Permeationsseite zu erhalten;
Konzentrieren des Permeats; und
Entfernen der Lactose und der Mineralien aus dem konzentrierten Permeat, um ein Molkenproteinkonzentrat aus Magermilch herzustellen.

4. Verfahren zur Herstellung eines Molkenproteinkonzentrats aus Magermilch, umfassend die Schritte:

Behandeln der Magermilch mit einer Mikrofiltrationsmembran (MF-Membran), welche eine Porengröße von 0,05 bis 0,12 μm aufweist, um ein Permeat auf der Permeationsseite zu erhalten;
Behandeln des Permeats mit einer Ultrafiltrationsmembran (UF-Membran), um ein Konzentrat, welches auf der Konzentrationsseite erhalten wird, zu gewinnen und um ein Permeat auf der Permeationsseite zu isolieren;
Konzentrieren des isolierten Permeats;
Entfernen der Lactose und der Mineralien aus dem konzentrierten Permeat; und
Zugabe des so erhaltenden Permeats zu dem gewonnenen Konzentrat, um ein Molkenproteinkonzentrat aus Magermilch herzustellen.

5. Verfahren gemäß Anspruch 3 oder 4, wobei das Molkenproteinkonzentrat eine Nichteiweiß-Stickstoffkomponente (NPN-Komponente) in einem Anteil von mehr als 5% der gesamten Feststoffe und denaturierte Molkenproteine in einem Anteil von weniger als 10% der gesamten Molkenproteine umfasst.

6. Verfahren gemäß einem der Ansprüche 3 bis 5, wobei der Konzentrierungsschritt des Permeats das Konzentrieren des Permeats durch Vakuum oder Gefrieren umfasst.

**Revendications**

1. Concentrat de protéines du lactosérum dérivé du lait écrémé, comprenant un composé azoté non protéique (NPN) dans un rapport supérieur à 5 % des composés solides totaux, et des protéines du lactosérum dénaturées dans un rapport inférieur à 10 % des protéines du lactosérum totales, dans lequel ledit concentrat de protéines du lactosérum peut être obtenu par un procédé qui comprend les étapes de :

traitement du lait écrémé avec une membrane de micro-filtration (MF) pour obtenir un perméat du côté de la perméation ;
concentration dudit perméat ; et
retrait du lactose et des minéraux dudit perméat concentré, pour produire un concentrat de protéines du lactosérum dérivé du lait écrémé.

2. Concentrat de protéines du lactosérum dérivé du lait écrémé, comprenant un composé azoté non protéique (NPN) dans un rapport supérieur à 5 % des composés solides totaux, et des protéines du lactosérum dénaturées dans un rapport inférieur à 10 % des protéines du lactosérum totales, dans lequel ledit concentrat de protéines du lactosérum peut être obtenu par un procédé qui comprend les étapes de :

traitement du lait écrémé avec une membrane de micro-filtration (MF) pour obtenir un perméat du côté de la perméation ;

traitement dudit perméat avec une membrane d'ultrafiltration (UF) pour récupérer un concentrat obtenu du côté de la concentration et isoler un perméat du côté de la perméation ;
concentration dudit perméat isolé ;
retrait du lactose et des minéraux dudit perméat concentré ; et
ajout du perméat obtenu audit concentrat récupéré, pour produire un concentrat de protéines du lactosérum dérivé du lait écrémé.

3. Procédé de production d'un concentrat de protéines du lactosérum dérivé du lait écrémé comprenant les étapes de :

traitement du lait écrémé avec une membrane de micro-filtration (MF) ayant une taille de pore de 0,05 à 0,12 μm, pour obtenir un perméat du côté de la perméation ;
concentration dudit perméat ; et
retrait du lactose et des minéraux dudit perméat concentré, pour produire un concentrat de protéines du lactosérum dérivé du lait écrémé.

4. Procédé de production d'un concentrat de protéines du lactosérum dérivé du lait écrémé comprenant les étapes de :

traitement du lait écrémé avec une membrane de micro-filtration (MF) ayant une taille de pore de 0,05 à 0,12 μm, pour obtenir un perméat du côté de la perméation ;
traitement dudit perméat avec une membrane d'ultrafiltration (UF) pour récupérer un concentrat obtenu du côté de la concentration et isoler un perméat du côté de la perméation ;
concentration dudit perméat isolé ;
retrait du lactose et des minéraux dudit perméat concentré ; et
ajout du perméat obtenu audit concentré récupéré, pour produire un concentrat de protéines du lactosérum dérivé du lait écrémé.

5. Procédé selon la revendication 3 ou 4, dans lequel le concentrat de protéines du lactosérum comprend un composé azoté non protéique (NPN) dans un rapport supérieur à 5 % des composés solides totaux et des protéines du lactosérum dénaturées dans un rapport inférieur à 10 % des protéines du lactosérum totales.

6. Procédé selon l'une quelconque des revendications 3 à 5, dans lequel l'étape de concentration dudit perméat comprend la concentration du perméat sous vide ou par congélation.

# FIG. 1

Process of Manufacturing Whey Protein Concentrate

# FIG. 2

Photograph of Electrophoresis of Whey Protein Concentrate